# EUROPÄISCHE PATENTANMELDUNG

(11) **EP 2 085 863 A1**
(43) Veröffentlichungstag der Anmeldung: **05.08.2009**
(21) Anmeldenummer: 08001640.5
(22) Anmeldetag: 29.01.2008
(51) Int. Cl.: G06F 3/048, G06F 3/033

(54) **Verfahren zur temporären Kopplung von Steuerbefehlen und Automatisierungsgerät**

(71) Anmelder: SIEMENS AKTIENGESELLSCHAFT, 80333 München (DE)
(72) Erfinder: Pohlan, Rudolf, 76337 Waldbronn (DE)

(57) **Zusammenfassung**

Angegeben wird ein Verfahren zur zumindest temporären Kopplung zumindest eines ersten Steuerbefehls (40) für ein Programm (52) eines Computers (12) mit zumindest einem zweiten Steuerbefehl (46) für das Programm (52), wobei zur Kopplung zumindest ein erster Drucksensor (18) und ein Drehregler (26) eines Eingabegerätes (10) zur Eingabe von Steuerbefehlen in den Computer (12) betätigt werden, ein Computerprogramm (52) mit durch einen Computer ausführbaren Programmcodeanweisungen zur Implementierung des Verfahrens, ein Computerprogrammprodukt, insbesondere Speichermedium, mit einem solchen, durch einen Computer (12), insbesondere ein Automatisierungsgerät, ausführbaren Computerprogramm (52) sowie ein Automatisierungsgerät mit einem solchen Computerprogrammprodukt.

## Beschreibung

Die Erfindung betrifft ein Verfahren gemäß dem Oberbegriff des Anspruchs 1. Die Erfindung bezieht sich weiterhin auf ein Computerprogramm mit durch einen Computer ausführbaren Programmcodeanweisungen zur Implementierung des Verfahrens, ein Computerprogrammprodukt sowie ein Automatisierungsgerät.

Zum computerunterstützten Zeichnen mit Hilfe von Graphikprogrammen (z. B. CAD-Systeme, computer aided design) werden allgemein bekannte Eingabegeräte für Computer, wie z. B. Tastaturen, Computermäuse, Eingabestifte, Trackbälle, Touchpads, Controller, Joysticks und dergleichen, verwendet. Dabei kann in CAD-Systemen als Navigationshilfe ein so genanntes "bird eye" (Vogelperspektive-Werkzeug) mit einem zuschaltbaren Navigationsfenster in das Graphikprogramm integriert sein. Durch Aktivierung dieses Werkzeugs kann ein Transferieren des Arbeitsbereichs in einen gewünschten Bereich der Zeichnung erreicht werden. Dabei zeigt das Vogelperspektive-Werkzeug in der Regel eine Gesamtansicht der Zeichnung, z. B. ein Arbeitsblatt bzw. alle Arbeitsblätter.

Ein Vergrößerungswerkzeug verbessert bei negativer Vergrößerung eine Übersicht über den Arbeitsbereich und mittels der positiven Vergrößerung wird z. B. eine genauere Positionierung von Objekten, z. B. Graphikobjekten, oder ein exakteres Zeichnen ermöglicht.

Insbesondere bei der "workbench Technik" besteht die Einschränkung, dass CAD-Systeme auf einem Anzeigegerät begrenzter Größe, z. B. einem Computermonitor, angezeigt werden. Da hierüber auch der Arbeitsbereich angezeigt wird, beschränken und verkleinern Werkzeuge und sonstige Hilfsmittel des CAD-Systems somit den sichtbaren und/oder nutzbaren Arbeitsbereich. Zudem muss, wenn eine Vergrößerung vom Nutzer gewünscht wird, eine bis dahin ausgeführte Handlung unterbrochen und das Werkzeug, z. B. das Vogelperspektive-Werkzeug, das Vergrößerungswerkzeug oder dergleichen, mittels Anwählen aktiviert und dieses ggf. später auch wieder durch erneutes Anwählen deaktiviert werden.

Daher ist eine der Erfindung zugrunde liegende Aufgabe, diese Nachteile zu vermeiden oder zumindest zu verringern und dabei gleichzeitig eine einfache und komfortable Vergrößerung zu gewährleisten. Mit dem Begriff Vergrößerung wird dabei und im Folgenden eine Größenänderung, also eine positive Größenänderung oder eine Verkleinerung (negative Vergrößerung), bezeichnet.

Diese Aufgabe wird erfindungsgemäß mit den Merkmalen des Anspruchs 1 gelöst. Dazu ist vorgesehen, dass bei dem Verfahren zur zumindest temporären Kopplung zumindest eines ersten Steuerbefehls für das Programm des Computers mit zumindest einem zweiten Steuerbefehl für das Programm zumindest ein erster Drucksensor und ein Drehregler eines Eingabegerätes zur Eingabe von Steuerbefehlen in den Computer betätigt werden. Dabei und im Folgenden wird mit dem Begriff Steuerbefehl insbesondere eine Werkzeug-Funktionalität des Programms, also ein Software-Werkzeug, bezeichnet. Somit werden aufgrund einer vereinfachten Aktivierbarkeit und/oder Deaktivierbarkeit ein Komfort für einen Nutzer erhöht und Handlungen nicht mehr unterbrochen.

Das oben und nachfolgend beschriebene Verfahren wird bevorzugt als Computerprogramm implementiert, so dass die Erfindung auch ein solches Computerprogramm mit durch einen Computer, insbesondere zumindest ein Automatisierungssystem und/oder ein von diesem umfasstes Automatisierungsgerät, also z. B. ein Programmier- oder Bediengerät, ausführbaren Programmcodeanweisungen betrifft sowie ein Computerprogrammprodukt, also z. B. einen Datenträger, ein Speichermedium und dergleichen, mit einem solchen durch einen Computer, also insbesondere ein Automatisierungssystem, ausführbaren Computerprogramm. Des Weiteren betrifft die Erfindung ein besonders geeignetes Automatisierungsgerät gemäß Anspruch 8 mit einem solchen Computerprogrammprodukt oder mit einem solchen Computerprogramm oder einer Implementation des eingangs skizzierten und nachfolgend weiter beschriebenen Verfahrens.

Vorteilhafte Ausgestaltungen der Erfindung sind Gegenstand der Unteransprüche.

In einer bevorzugten Ausführungsform ist das Eingabegerät eine Computermaus, wobei der zumindest eine erste Drucksensor eine erste Maustaste und der zumindest eine Drehregler ein allgemein bekanntes sog. Mausrad sind, welche auf einer einer Hand eines Nutzers zugewandten Seite - Oberseite - der Computermaus angeordnet sind, was eine einfache und bequeme Handhabbarkeit durch den Nutzer gewährleistet.

Bevorzugt ist das Programm ein Graphikprogramm, z. B. ein CAD-System und/oder ein graphisches Programmierwerkzeug, z. B. für CFC (Continuous Function Chart), SFC (Sequential Function Chart), KOP (Kontaktplan), FUP (Funktionsplan-Diagramm) und dergleichen, woraus sich eine vorteilhafte Vereinfachung in der Handhabung durch einen Nutzer sowie ein erhöhter Bedienkomfort ergibt.

In einer bevorzugten Ausführungsform ist dem ersten Steuerbefehl eine Positionierungsfunktion eines Objekts, insbesondere eines Graphikobjekts und/oder Textobjekts, zugeordnet. Zudem oder alternativ kann dem zweiten Steuerbefehl eine Vergrößerungsfunktion zugeordnet sein.

Wenn dem ersten und zweiten Steuerbefehl die Positionierungsfunktion bzw. die Vergrößerungsfunktion zugeordnet ist, wird gewährleistet, dass das Graphikobjekt einfach und zugleich genau positioniert werden kann und dass zudem eine gute Übersicht über den Arbeitsbereich gegeben ist.

Besonders bevorzugt ist eine Standard-Vergrößerung für das Programm und/oder das Eingabegerät hinterlegt oder hinterlegbar, welche gültig ist, wenn der erste und zweite Steuerbefehl nicht gekoppelt sind, also wenn der erste Drucksensor und/oder Drehregler nicht betätigt werden/wird. Somit kann der Nutzer die Vergrößerungsfunktion bedarfsabhängig aktivieren und ggf. nutzen oder deaktivieren.

Bevorzugt kann bei Kopplung, insbesondere bei gedrückter Maustaste, vom Nutzer dynamisch mittels Drehung des Drehreglers um dessen Drehachse die Vergrößerung bedarfsgerecht und/oder wunschgemäß geändert werden, z. B. schrittweise oder kontinuierlich, um entweder einen guten Überblick über den Arbeitsbereich oder eine Detailansicht zumindest eines Ausschnittes des Arbeitsbereiches zum genauen Positionieren des Graphikobjekts zu erreichen.

In einer bevorzugten Ausführungsform umfasst das Eingabegerät zumindest einen mit dem Drehregler korrespondierenden zweiten Drucksensor.

In einer besonders bevorzugten Ausführungsform kann für den Drehregler und/oder den zweiten Drucksensor zumindest ein dritter Steuerbefehl hinterlegt oder hinterlegbar sein, welcher zumindest temporär statt des zweiten Steuerbefehls mit dem ersten Steuerbefehl koppelbar sein kann. So kann beispielsweise dem dritten Steuerbefehl eine allgemein bekannte Scrollfunktion zugeordnet sein. Zudem oder alternativ kann diese beispielsweise durch ein zumindest teilweises Bewegen eines vom Eingabegerät steuerbaren Zeigeobjekts über eine sog. Scrollbar oder durch Anstoßen an eine solche oder an einen Rand des Arbeitsbereiches, eines Fensters und dergleichen, aktivierbar sein. Hieraus ergibt sich ein hoher Nutzerkomfort, da verschiedene "Werkzeuge" mittels einfacher Nutzerhandlungen (drücken, drehen) nutz- und koppelbar sind.

Zudem wird, wenn zumindest zur Kopplung von erstem und zweitem sowie von erstem und drittem Steuerbefehl die Drucksensoren und der Drehregler unterschiedlich kombiniert betätigt werden, gewährleistet, dass eine Gefahr einer unbeabsichtigten Kopplung vermieden oder zumindest verringert wird.

In einer weiteren bevorzugten Ausführungsform werden zur Kopplung der erste Drucksensor und der Drehregler dadurch betätigt, dass der erste Drucksensor gedrückt bzw. der Drehregler gedrückt und/oder gedreht wird/werden. Dies kann in zeitlichem Zusammenhang, z. B. gleichzeitig, erfolgen. Somit wird eine einfache und vom Nutzer leicht kontrollierbare Kopplung von erstem und zweitem Steuerbefehl gewährleistet, wodurch sich zudem vorteilhafterweise eine einfache Aktivierbarkeit und Deaktivierbarkeit der Vergrößerungsfunktion ergibt.

In einer bevorzugten Ausführungsform des Automatisierungsgeräts umfasst dieses zumindest ein Eingabegerät, z. B. eine Computermaus oder dergleichen, zur Eingabe von Steuerbefehlen. Das Eingabegerät umfasst dabei zumindest einen ersten Drucksensor und einen Drehregler zur zumindest temporären Kopplung des zumindest einen ersten Steuerbefehls mit dem zumindest einen zweiten Steuerbefehl für das Programm, wie oben und im Folgenden beschrieben.

Der Vorteil der Erfindung und ihrer Ausgestaltungen besteht damit insbesondere darin, dass mittels einer solchen temporär mit einer Positionierungs- und/oder Eingabefunktion (für Graphikobjekte und/oder Textobjekte) koppelbaren dynamischen Vergrößerungsfunktion jederzeit eine Übersicht über den Arbeitsbereich eines Programms, z. B. Graphikprogramms und/oder Programmierwerkzeugs, insbesondere für ein Automatisierungssystem, oder eine Vergrößerung zur genauen Darstellung und/oder Positionierung der Objekte gewählt werden kann. Dabei kann eine Vergrößerung stufenweise oder kontinuierlich wählbar sein, bei einer Computermaus z. B. mittels einer zumindest teilweisen Drehung eines Mausrades, insbesondere bei betätigter erster Maustaste und/oder einer betätigten zweiten Maustaste. Dabei ist es nicht erforderlich, dass der Nutzer zur Änderung der Vergrößerung ein vom Ausgabegerät angezeigtes Vergrößerungswerkzeug aktiviert, also eine Arbeit wie das Positionieren unterbricht, um damit nach dem Auswählen der Vergrößerung fortzufahren.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten führen.

Darin zeigen
- FIG 1: eine schematische Darstellung eines Eingabegerätes für einen Computer gemäß dem Stand der Technik,
- FIG 2: eine schematische Darstellung eines erfindungsgemäßen Verfahrens,
- FIG 3: eine schematische Darstellung einer Arbeitsoberfläche eines Computerprogramms gemäß dem Stand der Technik,
- FIG 4: eine schematische Darstellung einer Arbeitsoberfläche eines erfindungsgemäßen Computerprogramms in Übersichtsansicht und
- FIG 5: eine schematische Darstellung einer Arbeitsoberfläche eines erfindungsgemäßen Computerprogramms in Detailansicht.

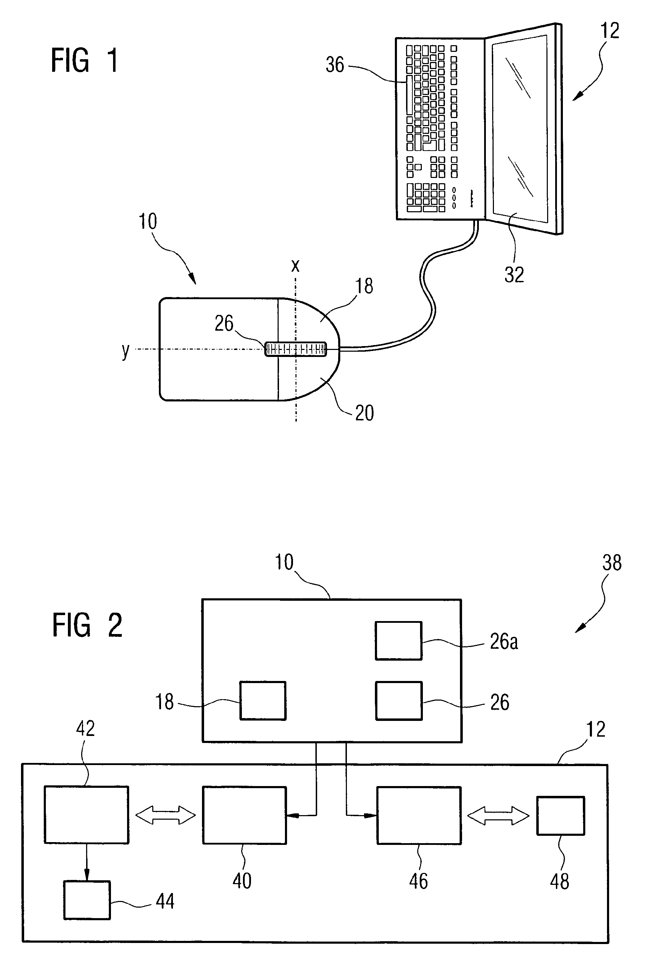

FIG 1 zeigt eine schematische Darstellung eines Eingabegerätes 10 für einen Computer 12, z. B. eine Computermaus, gemäß dem Stand der Technik, mit einem auf dessen Oberseite 16, welche einer Hand eines Nutzers zugewandt ist, angeordneten ersten und dritten Drucksensor 18, 20, hier als erste und zweite Maustaste dargestellt. Zwischen diesen ist ein Drehregler 26 angeordnet, hier beispielsweise ein Mausrad, dessen Drehachse X im Wesentlichen senkrecht zu einer Längsachse Y der Computermaus angeordnet ist. Dem Drehregler 26 ist ein zweiter Drucksensor (nicht dargestellt) zugeordnet.

Der Computer 12 umfasst als Ausgabegerät 32 einen Monitor sowie als zweites Eingabegerät 36 eine Tastatur.

FIG 2 zeigt eine schematische Darstellung eines erfindungsgemäßen Verfahrens 38 zur zumindest temporären Kopplung zumindest eines ersten Steuerbefehls 40 für den Computer 12, wobei dem ersten Steuerbefehl 40 hier eine Positionierungsfunktion 42 für ein Graphikobjekt 44 zugeordnet ist, und eines zweiten Steuerbefehls 46, welchem hier eine Vergrößerungsfunktion 48 zugeordnet ist. Dabei erfolgt die Kopplung mittels einer Aktivierung des ersten Drucksensors 18 und des Drehreglers 26 des Eingabegerätes 10, wobei der Drehregler 26 mit einem zweiten Drucksensor 26a korrespondieren kann, in diesem Beispiel also mittels Betätigung der ersten Maustaste und des Mausrads der Computermaus.

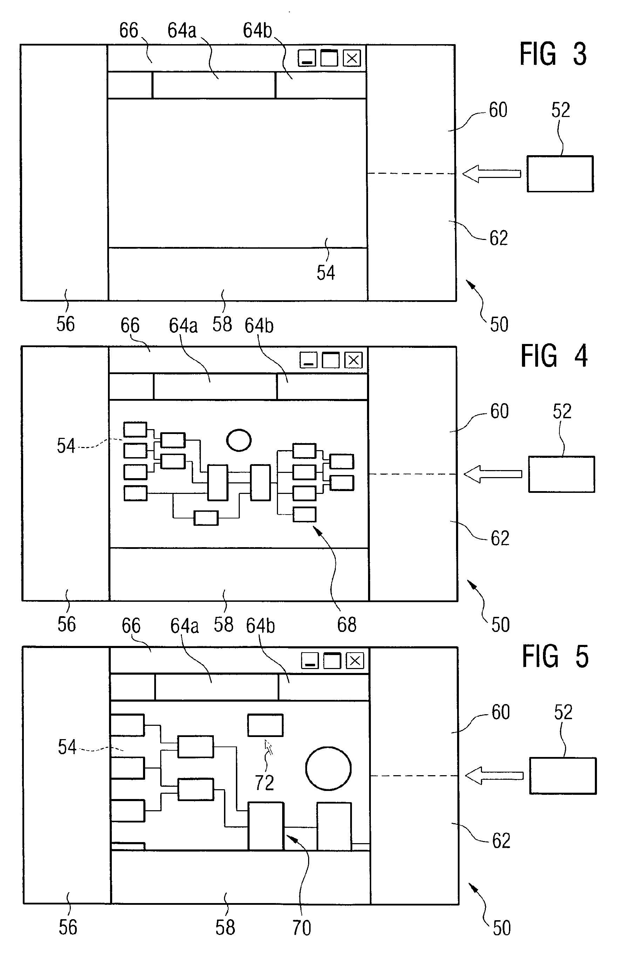

FIG 3 zeigt eine schematische Darstellung einer Arbeitsoberfläche 50 eines Computerprogramms 52 gemäß dem Stand der Technik, wie auf dem Ausgabegerät 32 (dargestellt in FIG 1) angezeigt. Dabei ist ein Arbeitsbereich 54 durch Software "Werkzeuge" beschränkt, hier ein Navigator-Werkzeug 56, eine Eigenschaften-Anzeige 58, Tasks und Palette Werkzeuge 60, 62 sowie Ansichten-Anzeigen 64a, 64b und eine Editor Leiste 66, was eine nutzbare Größe des Arbeitsbereichs 54 verringert.

FIG 4 zeigt eine schematische Darstellung der Arbeitsoberfläche 50 eines erfindungsgemäßen Computerprogramms 52 mit dem Arbeitsbereich 54 in einer Übersichtsansicht 68.

FIG 5 zeigt eine schematische Darstellung der Arbeitsoberfläche 50 des erfindungsgemäßen Computerprogramms 52 mit dem Arbeitsbereich 54 in einer Detailansicht 70. Zudem ist ein vom Eingabegerät 10, hier der Computermaus (gezeigt in FIG 1), steuerbarer Mauszeiger 72 dargestellt.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnung offenbarte Merkmalskombinationen zu beanspruchen.

### Damit lässt sich die Erfindung kurz wie folgt darstellen:

Angegeben wird ein Verfahren zur zumindest temporären Kopplung zumindest eines ersten Steuerbefehls 40 für ein Programm 52 eines Computers 12 mit zumindest einem zweiten Steuerbefehl 46 für das Programm 52, wobei zur Kopplung zumindest ein erster Drucksensor 18 und ein Drehregler 26 eines Eingabegerätes 10 zur Eingabe von Steuerbefehlen in den Computer 12 betätigt werden, ein Computerprogramm 52 mit durch einen Computer ausführbaren Programmcodeanweisungen zur Implementierung des Verfahrens, ein Computerprogrammprodukt, insbesondere Speichermedium, mit einem solchen, durch einen Computer 12, insbesondere ein Automatisierungsgerät, ausführbaren Computerprogramm 52 sowie ein Automatisierungsgerät mit einem solchen Computerprogrammprodukt.

## Patentansprüche

1. Verfahren zur zumindest temporären Kopplung zumindest eines ersten Steuerbefehls (40) für ein Programm (52) eines Computers (12) mit zumindest einem zweiten Steuerbefehl (46) für das Programm (52),
**dadurch gekennzeichnet, dass** zur Kopplung zumindest ein erster Drucksensor (18) und ein Drehregler (26) eines Eingabegerätes (10) zur Eingabe von Steuerbefehlen in den Computer (12) betätigt werden.

2. Verfahren gemäß Anspruch 1, wobei das Eingabegerät (10) eine Computermaus ist.

3. Verfahren gemäß Anspruch 1 oder 2, wobei das Programm (52) ein Graphikprogramm und/oder ein graphisches Programmierwerkzeug ist.

4. Verfahren gemäß einem der vorangehenden Ansprüche, wobei dem ersten Steuerbefehl (40) eine Positionierungsfunktion eines Graphikobjekts (44) zugeordnet ist.

5. Verfahren gemäß einem der vorangehenden Ansprüche, wobei dem zweiten Steuerbefehl (46) eine Vergrößerungsfunktion (48) zugeordnet ist.

6. Computerprogramm (52) mit durch einen Computer ausführbaren Programmcodeanweisungen zur Implementierung des Verfahrens nach einem der Ansprüche 1 bis 5, wenn das Computerprogramm (52) auf einem Computer (12), insbesondere einem Automatisierungsgerät, ausgeführt wird.

7. Computerprogrammprodukt, insbesondere Speichermedium, mit einem durch einen Computer (12), insbesondere ein Automatisierungsgerät, ausführbaren Computerprogramm (52) gemäß Anspruch 6.

8. Automatisierungsgerät mit einem Computerprogrammprodukt gemäß Anspruch 7.

9. Automatisierungsgerät gemäß Anspruch 8 mit einem Eingabegerät (10) zur Eingabe von Steuerbefehlen,
mit zumindest einem ersten Drucksensor (18) und
einem Drehregler (26) zur zumindest temporären Kopplung eines ersten Steuerbefehls (40) mit zumindest einem zweiten Steuerbefehl (46) für das Programm (52) gemäß einem der Ansprüche 1 bis 5.
